Europäisches Patentamt

(19) European Patent Office

Office européen des brevets

(11) Numéro de publication: **0 191 258**
**B1**

(12) # FASCICULE DE BREVET EUROPEEN

(45) Date de publication du fascicule du brevet:
**02.08.89**

(51) Int. Cl.⁴: **G01F 13/00,** C03C 17/00,
B05B 7/14

(21) Numéro de dépôt: **85402603.6**

(22) Date de dépôt: **23.12.85**

(54) **Procédé et dispositif pour le dosage de matières pulvérulentes.**

(30) Priorité: **04.01.85 FR 8500052**

(43) Date de publication de la demande:
**20.08.86 Bulletin 86/34**

(45) Mention de la délivrance du brevet:
**02.08.89 Bulletin 89/31**

(84) Etats contractants désignés:
**AT BE CH DE FR GB IT LI LU NL SE**

(56) Documents cités:
**FR-A- 1 552 044**
**US-A- 3 109 680**
**US-A- 3 149 759**

(73) Titulaire: **SAINT-GOBAIN VITRAGE, Les
Miroirs 18, avenue d'Alsace, F-92400 Courbevoie(FR)**

(72) Inventeur: **Douche, Jean-Pierre, 6, route Nationale,
F-60150 Thourotte(FR)**
Inventeur: **Coulon, Jean-Claude, Ruelle de Brintet,
F-71640 Mercurey(FR)**
Inventeur: **Bouttier, Pierre, 14, rue de Giraudon,
F-95200 Sarcelles(FR)**

(74) Mandataire: **Leconte, Jean-Gérard et al, Saint-Gobain
Recherche 39, Quai Lucien Lefranc,
F-93304 Aubervilliers Cedex(FR)**

## Description

La présente invention concerne la distribution de matières pulvérulentes et en particulier leur dosage précis en vue de la réalisation de substrats revêtus d'un mince film uniforme desdites matières ou de produits résultant de leur pyrolyse sur lesdits substrats.

Pour revêtir un substrat d'un film de matière, il est connu de pulvériser sur ledit substrat porté à haute température et défilant à une vitesse constante, au moyen d'une buse, le produit à déposer qui se présente initialement sous forme de solution. Au contact du substrat, la solution se pyrolyse: le solvant s'évapore tandis que le produit se dépose en une fine couche.

Un tel procédé a cependant l'inconvénient majeur selon lequel la solution refroidit le substrat. Pour compenser le refroidissement, il est nécessaire de chauffer le substrat à une température supérieure à celle à laquelle le produit se pyrolyse normalement. Ce procédé est donc relativement coûteux et d'un faible rendement.

Selon un autre procédé connu, le produit à déposer est projeté sous forme de vapeur sur le verre. Quoiqu'à un degré moindre que dans le procédé de dispersion sous forme liquide, la vapeur refroidit le substrat et en outre elle conduit à un faible rendement. Mais surtout, les produits à déposer étant généralement toxiques, ce procédé ne doit être utilisé que dans des conditions d'étanchéité parfaite, ce qui conduit à l'utilisation d'un matériel compliqué et coûteux.

On connaît enfin un procédé dans lequel le produit est dispersé sous forme de poudre sur le substrat. Ce procédé ne refroidit pratiquement pas le substrat, mais il est difficile à mettre en œuvre dans les applications où l'on exige un dosage très précis. C'est le cas par exemple de la fabrication de verres spéciaux revêtus d'une très fine couche d'oxyde métallique obtenue par décomposition à haute température, puis oxydation d'un composé initialement sous forme de poudre et distribué sur le verre chauffé. Des exemples de tels verres, sont les verres colorés, les vitrages semi-réfléchissants, ceux qui possèdent un effet de serre et plus généralement des propriétés optiques thermiques ou électriques particulières. Pour ne pas altérer la transparence du vitrage, le film a généralement une épaisseur de quelques nanomètres et est constitué par exemple par de l'oxyde d'étain résultant de la décomposition d'un composé en poudre du type oxyde de dibutylétain ou difluorure de dibutylétain.

Or, ces composés ont une mauvaise coulabilité et ont donc une tendance naturelle à s'agglomérer et à produire un effet de voûte ou de cavitation dans le réservoir où ils sont stockés. De plus, pour obtenir les propriétés requises pour les verres spéciaux, il faut que l'épaisseur du film soit constante sur toute la surface du substrat, de sorte que l'on doit assurer le débit d'écoulement de la poudre avec une grande précision instantanée, ne dépassant pas 1%. Si la précision de l'écoulement est supérieure à cette valeur, on observe des irrégularités d'aspect ou de couleur sur le vitrage, ou encore des performances optiques, thermiques et/ou électriques insuffisantes et non uniformes sur la surface du vitrage.

Parmi les moyens couramment utilisés pour doser des poudres, on connaît la vis d'Archimède, mais la précision qu'elle permet d'obtenir est faible, le débit d'évacuation de la poudre variant périodiquement à chaque fois qu'un filet du pas de vis se présente devant l'orifice d'évacuation.

On connaît également des systèmes de dosage ayant recours à la fluidisation de la poudre. Mais ces systèmes doivent assurer une étanchéité parfaite, difficile à obtenir, en particulier avec les poudres toxiques, ce qui est souvent le cas pour les composés d'étain et/ou fluorés utilisés dans le traitement des substrats en verre.

Dans cet ordre d'idée, on peut citer le document US-A 3 109 680 qui propose un ensemble de dosage sous pression contrôlée, ayant un réservoir dans lequel la poudre est fluidisée, ledit réservoir étant sans fond, disposé au-dessus d'un disque tournant de façon à laisser déposer la poudre qu'il contient sur ledit disque, l'épaisseur de poudre déposée étant réglée par une râcle. La poudre ainsi déposée sur le disque forme un ruban qui est ensuite balayé dans une rainure en creux du disque d'où elle est aspirée.

Enfin, il est connu d'utiliser, mais pour des poudres ayant en principe une bonne coulabilité, un doseur comprenant un plateau circulaire horizontal, monté tournant autour de son axe et présentant sur sa face supérieure une rainure circulaire coaxiale, un bol d'alimentation disposé au-dessus du plateau à une distance dudit axe égale au rayon de la rainure et alimentant la rainure, et un dispositif d'aspiration et de distribution également disposé au-dessus du plateau à la même distance de l'axe, et fonctionnant sous pression.

L'alimentation et la distribution étant effectuées sous pression, un tel doseur ne peut fonctionner correctement qu'avec des poudres extrêmement fluides, qui ne se compactent pas, et avec de très faibles débits, voisins de 1kg/h. Par contre, dans les applications visées par l'invention, où les poudres ont une mauvaise coulabilité et doivent être distribuées à des débits de l'ordre de 10 à 40kg/h, ce doseur est inutilisable, étant donné que, sous l'action de la pression, la poudre subit un compactage dans la rainure et dans le dispositif d'aspiration et de distribution.

De plus, ce dispositif connu est prévu pour fonctionner en discontinu et risque de conduire à des variations par rapport au débit nominal, supérieures à la précision minimale instantanée tolérée.

Dans cet ordre d'idée, on peut encore citer le document FR-A 1 552 044, dans lequel est décrit un appareil du même type que précédemment, la rainure en creux du disque étant seulement remplacée par une succession de trous oblongs.

La présente invention vise à remédier aux inconvénients des dispositifs de dosage de la technique antérieure signalée, à savoir la faible précision du dosage, la nécessité d'une étanchéité parfaite, l'impossibilité de fonctionner en continu et la limitation à la distribution de trop faibles débits.

Elle propose à cet effet un procédé de dosage de poudres dans lequel on utilise un bol d'alimentation contenant la poudre, à fond ouvert et disposé au-dessus d'un plateau horizontal circulaire tournant et ayant une rainure circulaire dont une partie se trouve dans le bol, susceptible d'être remplie par la poudre, ladite poudre étant ensuite extraite pneuma-tiquement de la rainure après rotation du plateau relativement au bol et qui se caractérise en ce qu'on déverse la poudre dans le bol où règne la pression atmosphérique, on maintient dans le bol un niveau de poudre constant, qu'on désagglomère et homogénise en l'agitant en permanence.

Ainsi, les conditions sont réunies dans le bol pour que la rainure se remplisse de poudre ayant une densité constante dans le temps. Le débit de poudre qui est amené par la rainure au dispositif d'extraction est ainsi également constant.

Avantageusement, le remplissage du bol d'alimentation est obtenu au moyen d'appareils connus, tels que la vis d'Archimède, qui réalisent un dosage pondéral en amont du dosage volumétrique réalisé par le système de bol et de plateau tournant à rainure.

La précision de ce type d'appareil de dosage pondéral est insuffisante, mais le dosage volumétrique fait par la rainure affine la précision du dosage pondéral préalablement réalisé par la vis d'Archimède.

De plus, le débit de poudre fourni selon ce procédé est élevé puisque l'alimentation se fait en continu. On notera encore que la rotation relative du plateau par rapport au bol n'introduit pratiquement pas d'échauffement de la poudre contenue dans le bol et dans la rainure, de sorte que la poudre ne se dégrade pas prématurément.

L'invention concerne également un dispositif de dosage pour la mise en œuvre de ce procédé.

Le dispositif de dosage comprenant un bol d'alimentation à fond plat ouvert, un plateau circulaire tournant, animé d'un mouvement de rotation autour de son axe relativement au bol et ayant une face supérieure plane équipée d'une rainure circulaire, un dispositif d'aspiration dont l'orifice débouche en un point de la portion de rainure extérieure au bol, qui se caractérisé par le fait que le bol alimenté en continu et à niveau constant est à la pression atmosphérique et est équipé d'un agitateur en mouvement relatif par rapport à lui, et par le fait que le plateau est appliqué avec étanchéité contre le fond du bol grâce à un joint d'étanchéité à faible coefficient de frottement.

Avantageusement, le bol est alimenté par un dispositif de dosage pondéral, connu en soi, du type vis d'Archimède.

Le bol est alimente à niveau constant afin d'éviter une variation de pression statique sur la rainure et par suite, la formation d'un gradient de densité de la poudre dans le bol. Ce niveau est suffisamment bas pour que la poudre située à la partie inférieure du bol ne se compacte pas sous le poids de la colonne de poudre.

Un régulateur du débit de la vis d'Archimède peut être prévu pour assurer un remplissage du bol jusqu'à un niveau de référence constant. Bien entendu, ce niveau est différent pour chaque produit et dépend essentiellement des propriétés physico-chimiques du produit. Le régulateur peut comporter, de façon connue en soi, un détecteur de niveau qui, lorsque la poudre n'est pas au niveau de référence, commande, selon le cas, une accélération ou une décélération du moteur d'entraînement de la vis d'Ar-chimède. Avantageusement, il peut s'agir d'un détecteur de niveau optique ou d'un détecteur équivalent du type tel qu'il n'entre pas en contact avec la poudre de façon à ne pas perturber son écoulement.

Le mouvement de l'agitateur ainsi que l'absence de surpression dans le bol maintiennent la poudre sous une forme pratiquement fluide et désagrégée. La poudre ainsi fluidisée remplit la portion de rainure qui est contenue dans le bol, et par suite de la rotation relative du plateau par rapport au bol, elle est arasée sans être tassée dans la rainure par le joint d'étanchéité précité. La poudre qui arrive en regard du dispositif d'aspiration a une densité pratiquement constante, relativement faible, de l'ordre de 0,3. Elle peut donc être facilement aspirée et distribuée à débit constant sur un substrat.

Dans un mode de réalisation préféré de l'invention, le bol est fixe et l'agitateur tournant, mais le bol peut aussi bien tourner et l'agitateur être fixe.

Le joint d'étanchéité utilisé peut être constitué par une racle annulaire réalisée en un matériau à bon coefficient de frottement et qui est fixée sur le bord libre inférieur du bol. La racle est maintenue en contact par toute sa périphérie, avec la face supérieure du plateau au moyen de ressorts précontraints agissant sur le bol. La force des ressorts est calculée pour qu'un contact franc soit assuré tout en permettant un mouvement pratiquement libre du plateau.

L'agitateur peut être constitué par au moins une pale fixée sur un arbre et de préférence filiforme de manière à réduire sa surface de contact avec la poudre et donc l'échauffement de celle-ci. Pour la même raison, les pales devront être entraînées à faible vitesse.

Dans un mode de réalisation avantageux qui permet d'éviter le compactage de la poudre dans le bol ainsi que le phénomène de voûtage, chaque pale est constituée par une boucle plane fermée en fil de fer, comprenant deux bras verticaux montant à faible distance de la paroi du bol et qui sont reliés à leur extrémité inférieure par un segment horizontal présentant en son milieu une première portion en V renversé et à leur extrémité supérieure par un segment horizontal présentant en son milieu une seconde portion en V, la pale étant fixée par lesdites portions en V sur un arbre vertical d'entraînement disposé selon l'axe du bol.

L'agitateur peut également comporter deux pales disposées dans deux plans perpendiculaires ou un nombre de pales plus importants.

Cet agitateur est avantageusement muni d'un système de monte et baisse millimétrique, permettant d'ajuster sa position vis-à-vis du fond du bol constitué par le plateau.

Le dispositif d'aspiration est garni à son extrémité qui débouche dans la rainure, d'un joint annulaire d'étanchéité à faible coefficient de frottement, par lequel le dispositif d'aspiration repose sur la face supérieure du plateau.

Les extrémités garnies de joints d'étanchéité, du bol et de la tubulure du dispositif d'aspiration, sont emmanchées et font saillie à travers des ouvertures formées sur une plaque-support qui est fixée par son bord périphérique sur un bâti, les bords saillants desdits joints d'étanchéité reposant en contact glissant sur la face supérieure du plateau.

La plaque-support présente une lumière allongée qui chevauche les deux portions de rainure qui relient le bol à la tubulure du dispositif d'aspiration.

Lesdites portions de rainure étant à l'air libre, on comprend que le dispositif d'aspiration ne peut étendre son action que dans la portion de rainure qui se trouve sous la plaque-support. En l'absence d'une telle lumière, le dispositif d'aspiration aspirerait la poudre se trouvant sur toute la longueur de la rainure avant qu'elle se présente au droit de la tubulure d'aspiration ainsi que celle qui se trouve dans le bol. Le dosage serait ainsi déréglé.

Un mode de réalisation de l'invention sera décrit à présent plus en détail à titre d'exemple non limitatif, en regard des dessins annexés dans lesquels:

– la figure 1 est une vue schématique en coupe axiale illustrant le principe du fonctionnement du dispositif de dosage selon l'invention,

– la figure 2 est une vue en coupe axiale d'un mode de réalisation pratique du dispositif de dosage, et

– la figure 3 est une vue en plan du dispositif de la figure 2.

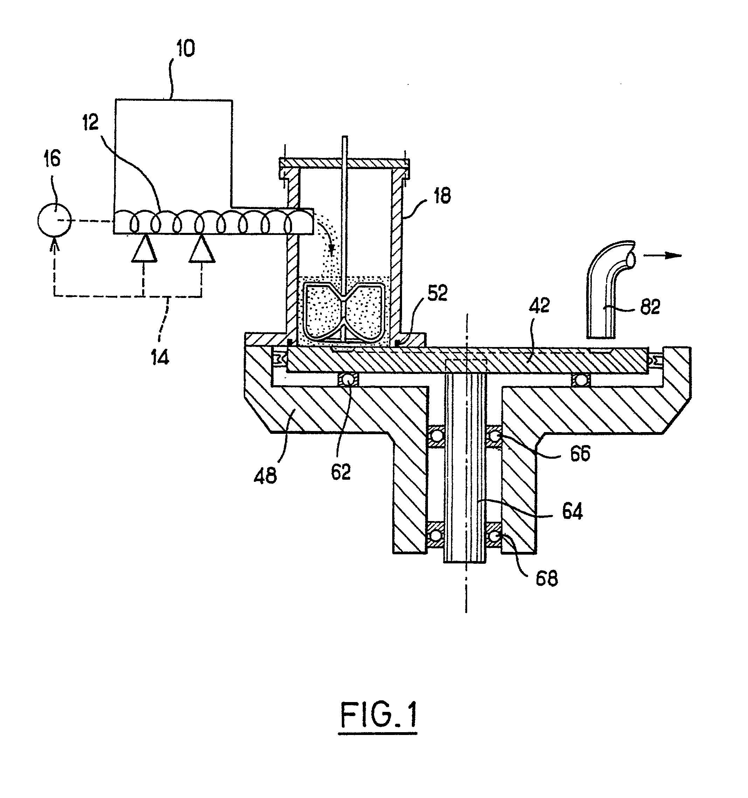

Avec référence à la figure 1, le dispositif de dosage de poudre comprend essentiellement une trémie 10 à extraction par vis d'Archimède 12. Celle-ci effectue un dosage pondéral de la poudre avec une précision sur le débit moyen inférieure à 1%, grâce à la prévision d'un régulateur 14 qui agit sur la vitesse du moteur d'entraînement 16 de la vis en réponse aux débits détectés en deux points de la longueur de la vis.

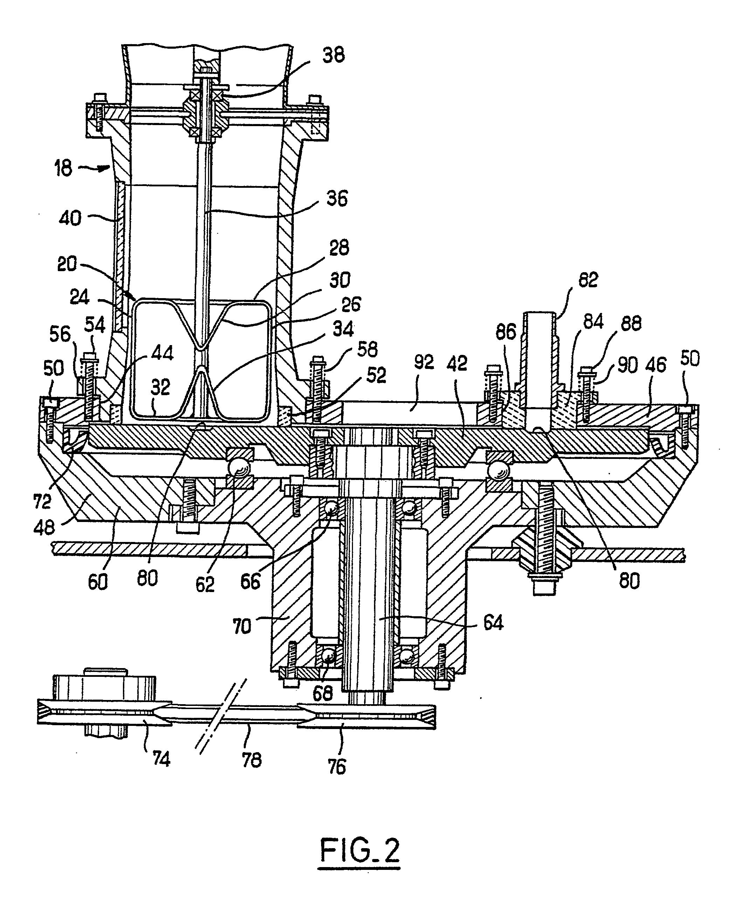

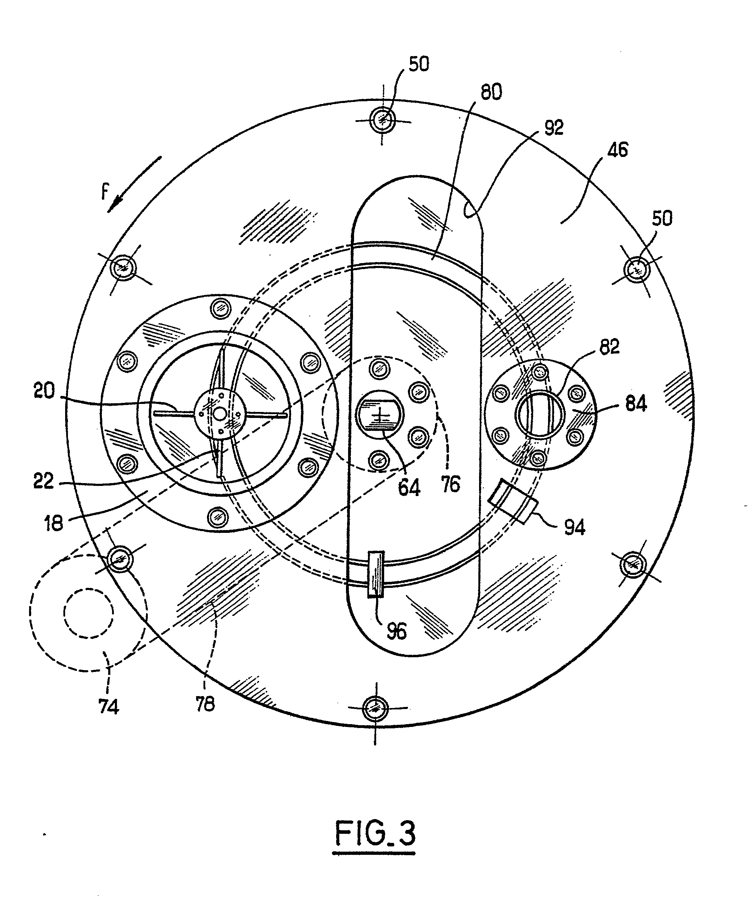

Cette dernière alimente en continu et à niveau constant un bol cylindrique 18 d'axe vertical et à fond ouvert. Dans le bol est monté un agitateur tournant ayant une forme spécialement étudiée pour éviter le phénomène de voûtage ou de cavitation de la poudre qui, comme on le sait, se traduit par la formation à la base du bol d'une cavité, surmontée d'une colonne de poudre qui n'arrive pas à s'écouler. A cet effet, comme le montrent les figures 2 et 3, l'agitateur comprend au moins deux pales filiformes 20,22, disposées dans des plans verticaux, perpendiculaires entre eux. Les pales sont en forme de boucle fermée et comprennent chacune deux bras verticaux ou légèrement inclinés 24, 26, qui montent à faible distance de la paroi latérale du bol, et qui sont reliés à leur extrémité supérieure par un segment horizontal 28 présentant en son milieu une portion 30 en forme de V dont la pointe est centrée par rapport à l'axe du bol, et à leur extrémité inférieure par un segment horizontal 32 présentant en son milieu une portion 34 en forme de V renversé, dont la pointe est également centrée par rapport à l'axe du bol.

Les pales sont fixées à l'extrémité inférieure d'un arbre 36. L'arbre tourillonne dans des paliers 38 et est entraîné en rotation par un moteur non représenté sur les figures, mais ainsi qu'on l'a précisé précédemment, les pales peuvent être fixes et le bol rotatif.

Une fenêtre transparente 40 est formée dans la paroi du bol 18, en vue de l'observation visuelle du niveau de la poudre dans le bol ou de la détection de ce niveau par des moyens appropriés.

Le bol 18 est fixe dans l'espace et repose en contact glissant par son bord libre inférieure sur la face supérieure d'un plateau circulaire horizontal 42, monté tournant autour de son axe et excentré par rapport au bol.

La face supérieure du plateau est plane à un grand degré de précision et est pourvue d'une rainure circulaire 80, coaxiale au plateau et de rayon sensiblement égal à l'entr'axe du bol et du plateau, de sorte que la rainure passe dans le bol au droit de son axe.

La poudre se trouvant dans la rainure peut en être extraite par aspiration et éjectée sur un substrat au moyen de tout dispositif de distribution connu, par exemple celui décrit dans la demande de brevet français publiée sous le numéro 2 542 636. Le dispositif d'aspiration est relié à un embout tubulaire 82 qui débouche au droit de la rainure 80 en un point situé à l'extérieur du bol. Cet embout tubulaire peut présenter des orientations variées, mais avantageusement il est orienté à 30° environ par rapport au plateau pour réduire l'impact de la poudre sur sa surface interne et ainsi éviter le colmatage. Plus précisément, il forme cet angle de l'ordre de 30° avec la tangente à la rainure au point où la poudre la quitte, ladite tangente étant tracée dans le sens de rotation du plateau à partir de ce point.

L'embout est fixé dans un manchon 84 en matière à faible coefficient de frottement, lequel est emmanché dans un second orifice 86 de la plaque-support 46. Le manchon 84 est en contact frottant étanche sur la face supérieure du plateau 42, sa force d'application étant réglée par un dispositif de rattrapage automatique de jeu à goujons 88 et ressorts 90, analogue à celui utilisé pour l'application du bol 18 sur le plateau.

Comme le montre la figure 2 et plus clairement la figure 3, la plaque-support 46 comporte une lumière allongée 92 qui chevauche les deux portions de rainure 80 qui se trouvent entre le bol 18 et l'embout 82. Ainsi qu'on l'a expliqué précédemment, le rôle de cette lumière est de limiter le champ d'action du dispositif d'aspiration uniquement à la portion de rainure qui se trouve sous la plaque-support 46 à droite de la lumière sur la figure 3, et d'éviter l'aspiration de la poudre directement dans le bol avant qu'elle ne soit amenée sous l'embout 82.

En amont de l'embout d'aspiration 82, la plaque-support 46 est percée d'une fenêtre 94 destinée à favoriser l'entrée d'air pour l'aspiration la création de remous, ce qui augmente le facteur de dispersion de la poudre. La taille et la position de cette fenêtre 94 par rapport à l'aspiration peut être modulée pour obtenir l'aspiration et les remous désirés.

De plus, avantageusement, un peigne 96, par exemple disposé au niveau de la lumière 92, ratisse la rainure afin de désagglomérer la poudre avant son aspiration par l'embout 82.

Comme autre moyen pour désagglomérer la poudre, on peut aussi employer une sonde à ultra-sons disposée sensiblement au même endroit que le peigne 96, une telle sonde étant moins sensible à l'encrassement qu'un objet mécanique comme le peigne 96 et étant donc recommandée dans le cas de poudres particulièrement collantes.

On décrira à présent le fonctionnement du dispositif de dosage de l'invention.

La vis d'Archimède 12 effectue un dosage pondéral de la poudre avec une précision sur le débit moyen inférieure à 1%. La poudre est déversée en continu dans le bol 18. Le niveau de la poudre dans le bol est maintenu à un niveau constant, par exemple celui du sommet des pales 20, 22, de manière à ne pas engendrer une variation de la pression hydrostatique sur la poudre contenue dans la rainure et donc une variation de la densité de la poudre. Le niveau est maintenu constant grâce à un régulateur comprenant un détecteur de niveau qui agit sur le moteur 16 d'entraînement de la vis d'Archimède.

L'agitateur rotatif assure la désagglomération et l'homogénéisation de la poudre sans la dégrader, étant donné que les pales 20, 22 sont filiformes et sont entraînées à faible vitesse. Dans ces conditions, les pales remplissent la portion de rainure 80 qui se trouve dans le bol, de poudre homogène ayant une densité constante.

Le plateau 42 est entraîné en rotation à vitesse constante dans le sens de la flèche f de la figure 3, de sorte qu'il transfère la poudre contenue dans la rainure jusqu'à l'embout 82, à débit volumique constant. la poudre est préalablement désagglomérée par le peigne 94 ou la sonde à ultra-sons et fluidisée par l'air qui pénètre par la fenêtre 94. Elle est ensuite aspirée vers un dispositif d'éjection qui la distribue sur un substrat qui défile à une vitesse constante, tel qu'une feuille de verre chauffée à une température de 650°C environ. La poudre subit une pyrolyse au contact du verre et forme sur ce dernier un film d'épaisseur absolument constante.

Il va de soi que des modifications de détail peuvent être apportées au dispositif de dosage selon l'invention. Par exemple, dans l'application particulière où la poudre doit être éjectée périodiquement, par exemple sur une série d'objets distincts tels que des bouteilles, défilant à vitesse constante, le dispositif de dosage doit fonctionner en séquentiel. La rainure est alors par exemple cloisonnée pour former une couronne d'alvéoles de dimensions identiques, chaque alvéole contenant la quantité de poudre nécessaire pour revêtir une bouteille.

Si le peigne 96 est maintenu, il est alors relevé puis abaissé périodiquement pour lui permettre de franchir les cloisonnements entre deux alvéoles.

## Revendications

1. Procédé de dosage d'une poudre dans lequel on utilise un bol d'alimentation (18) contenant la poudre, à fond ouvert et disposé au-dessus d'un plateau horizontal circulaire (42) tournant et ayant une rainure circulaire (80) dont une partie se trouve dans le bol (18), susceptible d'être remplie par la poudre, ladite poudre étant ensuite extraite pneumatiquement de la rainure après rotation du plateau relativement au bol, caractérisé en ce que le plateau étant appliqué avec étanchéité contre le fond du bol, on déverse la poudre dans le bol où règne la pression atmosphérique, on maintient dans le bol un niveau de poudre constant, qu'on désagglomère et homogénise en l'agitant en permanence.

2. Procédé selon la revendication 1, caractérisé en ce que le bol est alimenté à niveau constant, choisi suffisamment bas pour éviter le compactage de la poudre dans la rainure.

3. Procédé selon l'une des revendications 1 ou 2, caractérisé en ce que l'alimentation du bol (18) est obtenue à l'aide de moyens du type vis d'Archimède, qui réalisent un dosage pondéral.

4. Dispositif de dosage d'une poudre pour la mise en œuvre du procédé selon l'une des revendications 1 à 3, comprenant un bol d'alimentation (18) à fond plat ouvert, un plateau circulaire tournant (42) animé d'un mouvement de rotation autour de son axe relativement au bol et ayant une face supérieure plane équipée d'une rainure circulaire (80) centrée sur l'axe du plateau, un dispositif d'aspiration dont l'orifice débouche en un point de la portion de rainure extérieure au bol, caractérisé en ce que le bol (18) alimenté en continu et à niveau constant est à la pression atmosphérique et est équipé d'un agitateur (20,22) en mouvement relatif par rapport à lui, le plateau (42) est appliqué avec étanchéité contre le fond du bol (18) grâce à un joint d'étanchéité (52) à faible coefficient de frottement.

5. Dispositif de dosage d'une poudre selon la revendication 4, caractérisé en ce que des moyens de dosage pondéral, du type vis d'Archimède, sont prévus pour alimenter le bol (18).

6. Dispositif de dosage d'une poudre selon la revendication 5, caractérisé en ce que les moyens de dosage pondéral, et notamment la vis d'Archimède, sont équipés d'un régulateur de débit.

7. Dispositif de dosage d'une poudre selon l'une des revendications 4 à 6, caractérisé en ce que l'agitateur comprend au moins une pale constituée par une boucle plane fermée en fil de fer, comprenant deux bras verticaux (24, 26) montant à faible distance de la paroi du bol (18) et qui sont reliés à leur extrémité inférieure par un segment horizontal (32) présentant en son milieu une première portion (34) en V renversé dont la pointe est centrée par rapport à l'axe du bol et à leur extrémité supérieure par un segment horizontal (28) présentant en son milieu une seconde portion (30) en V dont la pointe est également centrée par rapport audit axe, la pale étant fixée par lesdites portions en V sur un arbre vertical d'entraînement (36) disposé selon l'axe du bol.

8. Dispositif de dosage d'une poudre selon l'une des revendications 4 à 7, caractérisé en ce que le dispositif d'aspiration est garni à son extrémité qui débouche dans la rainure, d'un joint annulaire d'étanchéité (84) à faible coefficient de frottement, par lequel le dispositif d'aspiration repose sur la face supérieure du plateau (42).

9. Dispositif de dosage d'une poudre selon la revendication 8, caractérisé en ce que les extrémités garnies de joints d'étanchéité du bol et de la tubulure (82) du dispositif d'aspiration, sont emmanchées et font saillie à travers des ouvertures (44, 86) formées sur une plaque-support (42) qui est fixée par son bord périphérique sur un bâti (48), les bords saillants desdits joints d'étanchéité reposant en contact glissant sur la face supérieure du plateau.

10. Dispositif de dosage d'une poudre selon la revendication 9, caractérisé en ce que la plaque-support (42) présente une lumière allongée (92) qui chevauche les deux portions de rainure qui relient le bol à la tubulure (82) du dispositif d'aspiration.

11. Dispositif de dosage d'une poudre selon l'une des revendications 9 et 10, caractérisé en ce que la plaque-support (42) comporte, en amont de la tubulure (82) du dispositif d'aspiration, une fenêtre (94) notamment pour l'introduction de l'air d'aspiration de la poudre.

12. Dispositif de dosage d'une poudre selon la revendication 10, caractérisé en ce qu'un moyen de désagglomération de la poudre, du type peigne (96) ou sonde à ultra-sons, est disposé pour agir dans la portion de rainure située en amont de l'aspiration.

13. Dispositif de dosage d'une poudre selon l'une des revendications 4 à 12, caractérisé en ce que dans le cas de la distribution séquentielle de poudre, par exemple sur des objets distincts, le plateau est pourvu sur sa face supérieure d'une couronne d'alvéoles de dimensions identiques obtenue par un cloisonnement de la rainure.

14. Application du dispositif selon l'une des revendications 3 à 13 à la formation d'une fine couche de matière sur une feuille de verre, la poudre dosée étant dispersée sur la feuille de verre.


**Patentansprüche**

1. Verfahren zum Dosieren eines Pulvers unter Verwendung eines das Pulver enthaltenden Beschickungsbehälters (18), der einen offenen Boden aufweist und auf einer drehbaren horizontalen kreisrunden Platte (42) mit einer kreisförmigen Rille (80), von der sich ein Teil in dem Behälter (18) befindet und die mit Pulver füllbar ist, angeordnet ist, wobei das Pulver anschließend, nach Drehung der Platte bezüglich des Behälters, aus der Rille pneumatisch extrahiert wird, dadurch gekennzeichnet, daß die Platte mit Dichtsitz gegen den Boden des Behälters angelegt ist, daß das Pulver in den Behälter geschüttet wird, in dem atmosphärischer Druck herrscht, daß die Füllhöhe des Pulvers in dem Behälter konstant gehalten und daß es unter ständigem Rühren entklumpt und homogenisiert wird.

2. Verfahren nach Anspruch 1, dadurch gekennzeichnet, daß der Behälter mit konstanter Füllhöhe beschickt wird, die so niedrig gewählt ist, daß eine Verdichtung des Pulvers in der Rille vermieden wird.

3. Verfahren nach Anspruch 1 oder 2, dadurch gekennzeichnet, daß die Beschickung des Behälters (18) mit Hilfe einer Einrichtung vom Typ einer Archimedischen Schraube erfolgt, die eine Gewichtsdosierung ermöglicht.

4. Vorrichtung zum Dosieren eines Pulvers zur Durchführung des Verfahrens nach einem der Ansprüche 1 bis 3, mit einem Beschickungsbehälter (18) mit offenem ebenem Boden, einer drehbaren kreisrunden Platte (42), die eine Rotationsbewegung um ihre Achse relativ zum Behälter ausführt und eine ebene Oberseite mit einer kreisrunden, zur Achse der Platte konzentrisch verlaufenden Rille (80) aufweist, und mit einer Absaugvorrichtung, deren Öffnung an einem Punkt des außerhalb des Behälters verlaufenden Teils der Rille mündet, dadurch gekennzeichnet, daß der kontinuierlich und mit konstanter Füllhöhe beschickte Behälter (18) unter atmosphärischem Druck steht und mit einem Rührwerk (20, 22) ausgestattet ist, das sich in Bezug auf den Behälter bewegt, und daß die Platte (42) gegenüber dem Boden des Behälters (18) mit Hilfe einer Dichtung (52) mit niedrigem Reibbeiwert abgedichtet ist.

5. Vorrichtung zum Dosieren eines Pulvers nach Anspruch 4, dadurch gekennzeichnet, daß eine Einrichtung zur Gewichtsdosierung vom Typ einer Archimedischen Schraube für die Beschickung des Behälters (18) vorgesehen ist.

6. Vorrichtung zum Dosieren eines Pulvers nach Anspruch 5, dadurch gekennzeichnet, daß die Einrichtung zur Gewichtsdosierung, insbesondere die Archimedische Schraube, einen Mengenregler aufweist.

7. Vorrichtung zum Dosieren eines Pulvers nach einem der Ansprüche 4 bis 6, dadurch gekennzeichnet, daß das Rührwerk wenigstens einen Rührflügel aufweist, der aus einer flachen geschlossenen Eisendrahtschlaufe besteht, die zwei vertikale Arme (24, 26) aufweist, die in geringem Abstand zur Wandung des Behälters (18) verlaufen und an ihrem unteren Ende durch einen horizontalen Abschnitt (32) miteinander verbunden sind, der in seiner Mitte einen ersten Abschnitt (34) in Form eines umgedrehten V aufweist, dessen Spitze koaxial zur Achse des Behälters ist, und die an ihrem oberen Ende durch einen horizontalen Abschnitt (28) verbunden sind, der in seiner Mitte einen zweiten Abschnitt (30) in Form eines V aufweist, dessen Spitze gleichfalls koaxial zur Achse des Behälters ist, wobei der Rührflügel mittels der V-förmigen Abschnitte an einer vertikalen Antriebswelle (36) auf der Längsachse des Behälters befestigt ist.

8. Vorrichtung zum Dosieren eines Pulvers nach einem der Ansprüche 4 bis 7, dadurch gekennzeichnet, daß die Absaugvorrichtung an ihrem in die Rille mündenden Ende einen Dichtungsring (84) mit niedrigem Reibbeiwert aufweist, mit dem die Absaugvorrichtung auf der Oberseite der Platte (42) aufliegt.

9. Vorrichtung zum Dosieren eines Pulvers nach Anspruch 8, dadurch gekennzeichnet, daß die jeweils mit einer Dichtung versehenen Enden des Behälters und des Stutzens (82) der Absaugvorrichtung in Öffnungen (44, 86), die an einer mit ihrem Umfangsrand auf einem Rahmen (48) befestigten Trägerplatte (42) ausgebildet sind, eingesteckt sind und von diesen vorstehen, wobei die vorstehenden Ränder der Dichtungen mit Gleitkontakt auf der Oberseite der Platte aufliegen.

10. Vorrichtung zum Dosieren eines Pulvers nach Anspruch 9, dadurch gekennzeichnet, daß die Trägerplatte (42) ein Langloch (92) aufweist, das die beiden Teile der Rille, die den Behälter mit dem Stutzen (82) der Saugvorrichtung verbinden, übergreift.

11. Vorrichtung zum Dosieren eines Pulvers nach Anspruch 9 oder 10, dadurch gekennzeichnet, daß die Trägerplatte (42) in ihrer Drehrichtung gesehen vor dem Stutzen (82) der Absaugvorrichtung ein Fenster (94) insbesondere für die Zufuhr von Luft für das Ansaugen des Pulvers aufweist.

12. Vorrichtung zum Dosieren eines Pulvers nach Anspruch 10, dadurch gekennzeichnet, daß eine Einrichtung zum Entklumpen des Pulvers wie etwa ein Kamm (96) oder eine Ultraschallsonde vorgesehen ist, die in dem Abschnitt der Rille zum Einsatz kommt, der sich vor der Absaugvorrichtung befindet.

13. Vorrichtung zum Dosieren eines Pulvers nach einem der Ansprüche 4 bis 12, dadurch gekennzeichnet, daß für die sequentielle Verteilung des Pulvers zum Beispiel auf verschiedene Gegenstände die Platte auf ihrer Oberseite mit einem Kranz von Zellen identischer Größe versehen ist, der durch eine Unterteilung der Rille gebildet wird.

14. Verwendung der Vorrichtung nach einem der Ansprüche 3 bis 13 zur Bildung einer feinen Schicht auf einer Glasplatte, wobei das dosierte Pulver auf der Glasplatte dispergiert wird.

**Claims**

1. A method of metering a powder, in which there is used a feed bowl (18), containing the powder, having an open bottom and disposed above a rotating circular horizontal plate (42) having a circular groove (80), a portion of which is situated in the bowl (18), capable of being filled with the powder, said powder being subsequently pneumatically extracted from the groove after rotation of the plate relative to the bowl, characterized in that, the plate being applied sealingly against the base of the bowl, the powder is poured into the bowl, in which atmospheric pressure exists, a constant level of powder is maintained in the bowl and the powder is disagglomerated and homogenized by continually agitating it.

2. A method according to Claim 1, characterized in that the bowl is supplied at a constant level, chosen sufficiently low to prevent compacting of the powder in the groove.

3. A method according to one of Claims 1 or 2, characterized in that the feed to the bowl (18) is provided by means of the Archimedean screw type, which carry out a metering by weight.

4. Apparatus for metering a powder for carrying out the method according to one of Claims 1 to 3, comprising a feed bowl (18) having a flat open bottom, a rotating circular plate (42) executing a rotary movement about its axis relative to the bowl and having a plane upper face provided with a circular groove (80) centered on the axis of the plate, a suction device, the orifice of which opens out at a point of the portion of the groove external to the bowl, characterized in that the bowl (18), continuously fed and at constant level, is at atmospheric pressure and is equipped with an agitator (20, 22) in movement relative to it, and the plate (42) is sealingly applied against the bottom of the bowl (18) by means of a seal (52) having a low coefficient of friction.

5. Apparatus for metering a powder according to Claim 4, characterized in that means for metering by weight of the Archimedean screw type are provided for feeding the bowl (18).

6. Apparatus for metering a powder according to Claim 5, characterized in that the means for metering by weight, and notably the Archimedean screw, are provided with a flow controller.

7. Apparatus for metering a powder according to one of Claims 4 to 6, characterized in that the agitator comprises at least one blade constituted of a closed flat loop of iron wire, comprising two vertical arms (24, 26) ascending at a small distance from the wall face of the bowl (18), which are connected together at their lower end by a horizontal segment (32) having, at its centre, a first portion (34) of inverted V-shape, the apex of which is central with respect to the axis of the bowl and, at their upper end, by a horizontal segment (28) having, at its centre, a second portion (30) of V-shape, the apex of which is also central with respect to said axis, the blade being fixed by said V-shaped portions on a vertical drive shaft (36) disposed on the axis of the bowl.

8. Apparatus for metering a powder according to one of Claims 4 to 7, characterized in that the suction device is furnished, at its end which opens out into the groove, with an annular seal (84) having a low coefficient of friction, by which the suction device rests on the upper face of the plate (42).

9. Apparatus for metering a powder according to Claim 8, characterized in that the ends provided with seals of the bowl and of the pipe (82) of the suction device are sleeved and project through openings (44, 86) formed on a support plate (42), which is fixed by its peripheral edge on a frame (48), the projecting edges of said seals resting in sliding contact on the upper face of the plate.

10. Apparatus for metering a powder according to Claim 9, characterized in that the support plate (42) has an elongated aperture (92), which overlaps the two portions of groove which connect the bowl to the pipe (82) of the suction device.

11. Apparatus for metering a powder according to one of Claims 9 and 10, characterized in that the support plate (42) comprises, upstream of the pipe (82) of the suction device, a window (94) notably for entry of the suction air for the powder.

12. Apparatus for metering a powder according to Claim 10, characterized in that a means for disagglomerating the powder, of the comb type (96) or ultrasonic probe type, is arranged to act in the portion of the groove situated upstream of the suction.

13. Apparatus for metering a powder according to one of Claims 4 to 12, characterized in that in the case where the powder is distributed sequentially, for example to discrete objects, the plate is equipped on its upper face with a ring of cells of identical dimensions, produced by partitioning the groove.

14. Application of the apparatus according to one of Claims 3 to 13 to the forming of a fine layer of material on a sheet of glass, the metered powder being dispersed on the sheet of glass.

FIG.1

FIG.2

FIG.3